# EUROPEAN PATENT APPLICATION

(11) **EP 4 672 172 A1**
(43) Date of publication of application: **31.12.2025**
(21) Application number: 24184409.1
(22) Date of filing: 25.06.2024
(51) Int. Cl.: G06V 10/75, G06V 10/82, G06V 20/17, G06T 7/73

(54) **METHODS AND SYSTEMS FOR DETERMINING A POSE OF A PLATFORM**

(71) Applicant: Helsing GmbH, 81671 Munich (DE)
(72) Inventor: EBERHARD, Thomas, 81671 Munich (DE)
(74) Representative: Rummler, Felix

(57) **Abstract**

A computer-implemented method of determining a pose of a platform, preferably an aircraft, the method comprising: receiving an input image of a portion of a surface, preferably the surface of the earth, the input image captured from a position of the platform; receiving a georeferenced reference representation of the portion; based on the reference representation, generating a synthetic image of the portion; determining a homography matrix between the synthetic image and the input image; and determining the pose of the platform based on the homography matrix.

## Description

### Technical Field

The present disclosure relates to systems, methods, and computer program products for determining a pose of a platform. The disclosure is applicable in the field of navigation, in particular air navigation.

### Background

A problem in the field of air navigation is localisation of an aerial vehicle using observation of its surroundings. For example, other navigation methods, e.g. satellite navigation, may fail or prove unreliable in some environments or under certain conditions.

A known solution includes self-localisation using observation of surroundings of the aircraft. This solution is prone to errors due to spurious effects in sensor data. This can lead to inaccurate pose determination.

There is a need for systems and methods that overcome these shortcomings.

### Summary

A first aspect of the present disclosure relates to a computer-implemented method of determining a pose of a platform. The platform is preferably an aircraft. The method comprises the following steps:
- receiving an input image of a portion of a surface, preferably the surface of the earth, the input image captured from a position of the platform;
- receiving a georeferenced reference representation of the portion;
- based on the reference representation, generating a synthetic image of the portion;
- determining a homography matrix between the synthetic image and the input image; and
- determining the pose of the platform based on the homography matrix.

The input image is preferably 2-dimensional (2D). 2D images are generable by a variety of sensors, such as cameras, imaging radars, or imaging sonars, The reference representation is preferably an image, more preferably a 3-dimensional (3D) image, or another 3D representation, such as a 3D model of the portion. The reference representation may be part of a 3D map of the earth. The synthetic image is preferably 2D so that a homography matrix can be determined more reliably. The synthetic image is preferably generated based on the reference image and one or more properties of the input image. The homography matrix allows projecting points from the input image to the synthetic image and vice versa. The pose is indicative of a relative position of the platform with respect to the portion.

A homography matrix allows relating points from the input image to the reference representation, because for any point on the input image, a corresponding point on the synthetic image can be determined by the homography matrix, and the synthetic image, and a corresponding point on the reference representation may be found by inverting the step of generation of the synthetic image. The determination of the pose may be based on key points comprised in the homography matrix.

In an embodiment, the synthetic image is generated at a resolution equal to a resolution of the input image. Thereby, the synthetic image is comparable to the input image, including in size. This facilitates processing by algorithms that require or benefit from the input image being at a fixed size, such as neural networks, which may have a fixed input size.

In another embodiment, generating the synthetic image is further based on a preliminary pose estimate of the platform. The preliminary pose estimate of the platform is preferably independent from the input images and/or reference representations. This allows determining the pose estimate and thus the synthetic image independently from the images and therefore reduces sources of error.

The method may further comprise determining the preliminary pose estimate by a navigation system. The navigation system preferably operates independently, and may determine the pose estimate independently, from the input image and/or the reference representation. The navigation system may comprise an Extended Kalman Filter and/or inertial navigation system. This allows determining the estimate in a way that is independent from the remaining steps of the method. In particular, the estimate can be provided without the requirement of any prior knowledge of the image, which reduces sources of error. The navigation system preferably comprises an inertial navigation system and/or a dead reckoning algorithm that determines the preliminary pose estimate based on known past positions of the platform. Determining the preliminary pose estimate preferably comprises measuring a distance between the portion and the platform. A distance may be measured by a radar device and/or an altimeter. The use of a measured distance allows a more accurate determination of the scale of the synthetic image.

In a further embodiment, determining the homography matrix comprises applying a RANSAC algorithm. A RANSAC algorithm allows determining a transform based on a limited number of points. Other points, that are less likely to be correctly matched, can be disregarded. This increases the reliability of the pose determined by the method.

In a further embodiment, the homography matrix relates to a homography transform that preserves angles between features within images. In particular, the homography may include a scale transform, a translation, and/or rotation. The homography does preferably not include, i.e. is free from, a shear transform. This is advantageous for the case that the platform is far away from the portion, at a location from which the portion appears flat.

In a further embodiment, the homography is free from scaling by a scaling factor outside a predetermined range. The range may be chosen as a range around an experimental scaling based on a measured distance between the platform and the portion, wherein the width of the range is determined as a predetermined multiple of a measurement error of the measured distance. This allows ruling out unrealistic transforms.

In a further embodiment, determining the homography matrix comprises processing the input image by a deep neural network configured to extract one or more key points. The input image may be supplied to an input of the deep neural network, which is configured to return the key points. The key points may be matched to reference key points related to the reference representation by a nearest-neighbour algorithm or a further neural network.

In another embodiment, determining the homography matrix comprises processing the input image by a deep neural network configured to return key point matches. The input image may be supplied to an input of the deep neural network. The deep neural network is operable to return matched key points related to both input and synthetic image. In this case, both functions are integrated into one neural network which directly returns matched key points.

In a further embodiment, the homography matrix is determined such that a minimum and/or maximum number of inlier key points between the input image and the synthetic image are matchable or matched. In particular, an iterative algorithm may determine a first estimate of the homography matrix and then refine the matrix step by step. The minimum number then refers to a minimum quality of the match. The algorithm may continue until a predetermined maximum number of inlier points is reached, and the method may then proceed to determine the pose based on the inlier points. This allows faster processing since the determination of inlier key points is not continued indefinitely. A maximum number of points is preferably set such that determination of further points leads to a change in the determined pose below a predetermined target accuracy. The target accuracy may be set at a value identical to or larger than the accuracy of a navigation system. This avoids further computation steps that do not contribute greatly to the result.

In a further embodiment, the inlier key points are processed to determine the pose only if a number of the inlier key points exceeds a predetermined threshold. This has the advantage that no pose determination is returned in cases where no highly accurate result can be returned. In these cases, there is an increased probability that the pose determined by the homography may be very different to the real pose, due to misidentification of features of the image. This is particularly relevant for navigation purposes, where the signal may be perturbed by meteorological conditions. In this case, it is preferred if the method recommences by receiving a new input image, e.g. an input image captured at a later time. This allows trying to find a match at a later time. The or a UAV may be navigated by other means, such as an inertial navigation system, until key points can be matched from a later image.

In a further embodiment, the key points comprise input image key points on the input image and reference key points on the reference representation, and the method further comprises matching the detected image key points to one or more reference key points on the reference representation. The features may be matched by comparing the feature descriptors and determining pairs of features that are similar.

In a further embodiment, determining the pose of the platform comprises processing key points by a Perspective-n-Point algorithm with RANSAC. Extracting the key points may include supplying the input image and/or the synthetic image to a neural network configured to determine the key points. Matching the key points may include applying a nearest-neighbour matching algorithm and/or a neural network to the key points. In embodiments, estimating the homography matrix comprises supplying the input image and the synthetic image to a neural network configured to determine the matched key points.

In a further embodiment, the observer comprises an unmanned aerial vehicle, UAV, the method further comprising capturing the input image by a sensor attached to or comprised in the UAV.

A second aspect of the present disclosure relates to a system comprising one or more processors and one or more storage devices. The system is configured to perform the computer-implemented method of the first aspect of the present disclosure. The system may comprise a computing device attachable or attached to or integrated in a UAV. The system may comprise or be communicatively connected to a sensor and/or navigation system.

A third aspect of the present disclosure relates to a computer program product for loading into a memory of a computer. The computer program product comprises instructions, that, when executed by a processor of the computer, cause the computer to execute a computer-implemented method of the first aspect.

In an embodiment, a non-transitory computer-readable storage medium is provided that stores instructions executable by one or more processors. The instructions comprise any of the steps of a method of the first aspect of the present disclosure.

### Brief description of the drawings

The features, objects, and advantages of the present disclosure will become more apparent from the detailed description set forth below when taken in conjunction with the drawings in which like reference numerals refer to similar elements.
- Figure 1 shows a flow chart of a method of determining a pose of a platform;
- Figure 2 shows a flow chart of a method of determining a homography matrix;
- Figure 3 shows a schematic representation of a scenario;
- Figure 4 shows a block diagram of a key point dataset; and
- Figure 5 shows a schematic representation of images, key points, and transforms.

### Detailed description

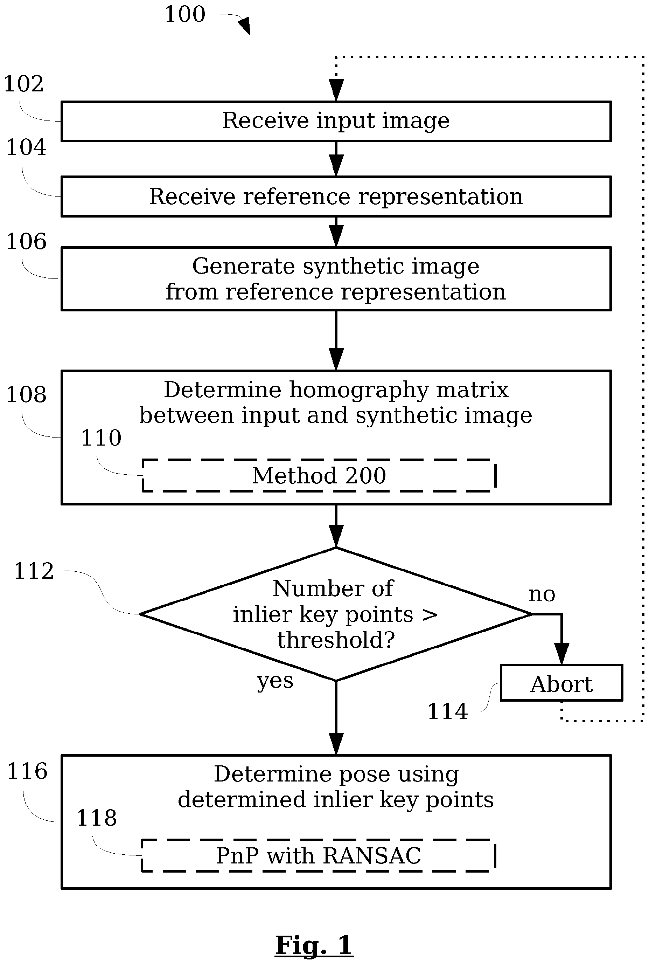

Figure 1 shows a flow chart of a method 100 of determining a pose of a platform. The method may be executed by an on-board computer of an aircraft, such as an unmanned aerial vehicle (UAV).

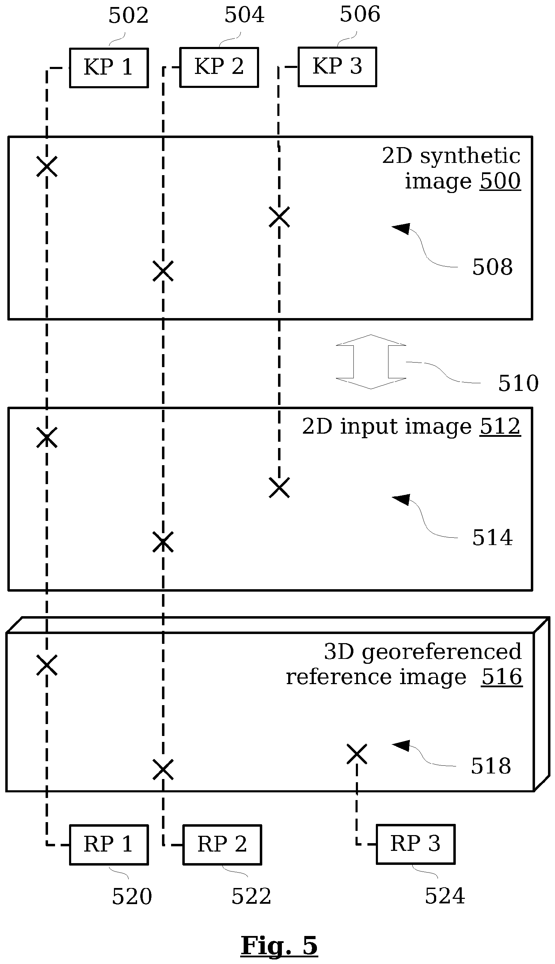

The method begins at step 102 by receiving an input image. The input image may comprise image 512 of Fig. 5. The image may be 2-dimensional.

At 104, a reference representation is received. The reference representation may be an image, such as a 3-dimensional image. The reference representation is preferably loaded from a database, which may be stored on board the UAV. The reference representation is selected such that it can be expected that it shows at least part of the same portion of the surface as the input image. For example, an inertial navigation system may already provide an estimate of the present pose of the platform. This allows selecting a suitable image. Alternatively, a larger image can be received and cropped.

At 106, a synthetic image is generated from the reference representation. The synthetic image is preferably 2-dimensional. Generating the synthetic image may comprise generating a projection of the 3-dimensional reference representation onto a plane that is tangent to the Earth ellipsoid, and thus approximates the ellipsoid on a small scale. It is preferred to generate the synthetic image at the same size and/or resolution as the input image. The synthetic image is preferred to mimic the input image in that it shows the portion on the reference representation as would be expected when observing the portion by the sensor on the platform. Therefore, it is preferred to generate the synthetic image based on the parameters of the sensor.

The generation of the synthetic image is preferably based on an initial estimate of the pose. The estimate may be determined by any technology to update a position of an aircraft, such as an Extended Kalman Filter (EKF), inertial navigation, or satellite navigation. An EKF is based on integrating physical sensors that measure acceleration of the platform. An EKF may fuse the relative updates of the sensors with absolute updates from the estimation algorithm. The estimate of the pose may further be based on data from other sensors, such as an altimeter. The estimate of the pose may thus be used to crop a part of the projected reference representation so that it corresponds to the field of view of the sensor.

At 108, a homography matrix is determined between input and synthetic images. The output of this step comprises an indication of inlier key points, i.e. key points indicative of features present on both the input image and the reference representation which are mapped by the homography matrix onto one another.

The inlier key points likely relate to identical features. It is preferred to use a homography transform that only comprises a translation, rotation, and/or scaling, but no shear transform. This means that the algorithm creating the homography is constrained to only estimate a homography of a subspace of all possible homographies, e.g. only homographies that only scale, translate, and rotate, but do not shear image points. This is advantageous for the case that the platform is far away from the portion, from where the portion appears flat.

Preferably, a RANSAC algorithm is used, and only points are selected that are projectable by the homography.

At 112, it is determined whether the number of inlier key points exceeds a given threshold. If this is the case, the determination of the homography was likely accurate enough so that the matched features correspond to the same real features of the portion depicted by the images, e.g. the portion of the surface of the earth.

If the number of inlier key points is not higher than the predetermined threshold, the method is aborted, 114, because the number of inlier key points is so low that determining a pose based on them would likely lead to a wrong result. In this case, it is preferred to restart the method at step 102 using a different, e.g., newly captured, input image, and/or a different reference representation.

If, however, the number of inlier key points is higher than the threshold, the inlier key points are used to determine the pose at 116. Determination of the pose may comprise retrieving, for each inlier key point, geographic coordinates. Retrieving geographic coordinates preferably comprises determining coordinates of the inlier key point on the synthetic image, transforming the coordinates into coordinates of the reference representation, and determining the geographic coordinates using the georeferences of the reference representation. The geographic coordinates may then be used to determine the pose. The pose may be determined, 118, by solving the perspective n-point (PnP) problem by a Random Sample Consensus (RANSAC) algorithm. The PnP with RANSAC receives the determined key points and matches as many as possible.

The pose as determined may then be supplied to a navigation system, preferably an EKF to update its pose estimate.

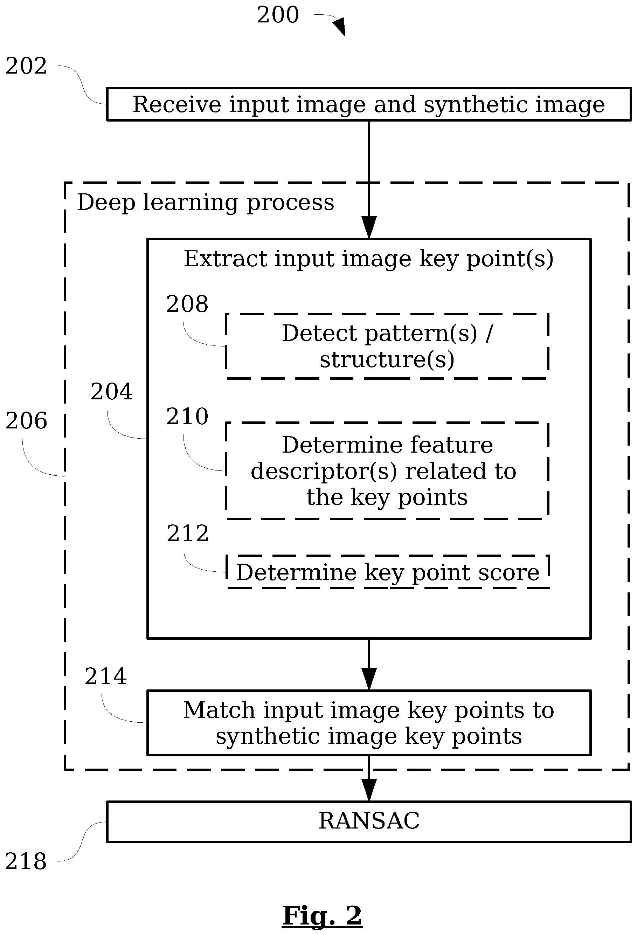

Figure 2 shows a flow chart of a method 200 determining a homography matrix. The method begins at 202 by receiving an input image.

The method goes on to extract, 204, one or more input image key points. Extraction of the key points may be conducted by a deep learning process 206. The deep learning process may include a neural network, preferably a convolutional neural network. For example, VGG or ResNet (K. He, X. Zhang, S. Ren and J. Sun, "Deep Residual Learning for Image Recognition," 2016 IEEE Conference on Computer Vision and Pattern Recognition (CVPR), Las Vegas, NV, USA, 2016, pp. 770-778, doi: 10.1109/CVPR.2016.90) may be trained to return a set of key points upon receiving an image. A training data set may comprise a plurality of images and a related set of key point coordinates as a ground truth. Once trained, the neural network may then be used to determine key points from a new image. However, other key point descriptors may be used for either or both of training and inference, as far as the descriptors are suitable for determination of key points that may be georeferenced. The key points may then be processed by a key point matcher that matches key points on the input image to key points on the synthetic image.

Optionally, a neural network may be trained to predict matched key points on input and synthetic images. The neural network may be configured to receive two input images, and to calculate key points that match on both images. The neural network may determine key point locations on the individual images as a latent representation and output only key points that match on both the input and the synthetic image. A training dataset may include corresponding input and synthetic images and matched key points as a ground truth. In inference, the neural network may receive the input image and the synthetic image and can then predict the matched key points. Again, the neural network may comprise VGG and/or ResNet. The neural network preferably outputs the matched key points together with a key point score, 212, indicative of a confidence of correct detection. Any training images may comprise real-world images taken by a similar platform, e.g. real-world images captured by a UAV in a setting compatible to that of the application. For example, the training images may comprise one or more images of a portion of a surface of the earth taken by a downward-facing camera.

Optionally, the method may comprise receiving a synthetic or reference representation and extracting reference key points from this image in the same or a similar way as from the input image. However, reference key points may be obtained by other means, in particular by loading key point data from a database.

At 214, the input image key points are matched to key points on the synthetic image.

At 218, a RANSAC algorithm is used to base the prediction only on inlier key points, i.e. matches that are correct at high probability. It is preferred to use a RANSAC schema that operates on arbitrary pixel matches.

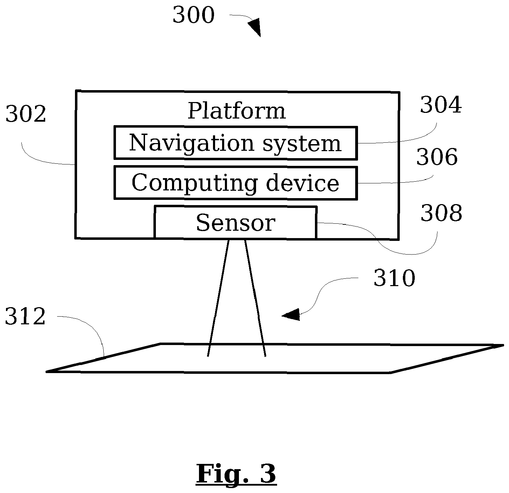

Figure 3 shows a schematic representation of a scenario. A platform 302, which in this example includes a UAV, is situated proximate a portion 312 of a surface. In this example, the platform 302 flies at high altitude over portion 312 of the surface of the earth, such that the distance between the platform 302 and the portion 312 is large compared to any height of any structure of portion 312. This means that the UAV is at an altitude high above the highest summits of the surface of the earth. This means that a projection of the portion 312 onto an entirely flat surface only leads to a small change in lateral coordinates of any features on the portion 312. However, the present disclosure is not limited to this scenario. It may be used for indoor navigation of a small UAV, wherein the portion may comprise a portion of any surface, e.g., a wall, floor, ceiling, or any other detectable object. The platform may include other devices, such as manned aircraft, or a manned or unmanned submarine.

The platform 302 preferably comprises a navigation system 304. It is preferred to use a navigation system that can operate independently from satellite navigation. For example, an inertial navigation system and/or the use of an EKF and/or dead reckoning algorithm allows determining an estimate of a current pose based on past values even in GPS-denied environments. The navigation system may further comprise an altimeter, such as a radar or lidar based altimeter. This allows determining the scale of the input image generated by the sensor, such that the synthetic image may be generated at a scale identical to the scale of the input image. The navigation system preferably comprises an altimeter that is operable without emitting any signals, such as a pressure altimeter. The computing device 306 is communicatively coupled to the navigation system and operable to execute any of methods 100 and 200.

The navigation system may generate a pose estimate of the platform, based on an EKF, which may be corrected by inertial navigation or satellite navigation. However, satellite navigation may not be available, and it is preferred to update the pose using method 100 or 200. Specifically, the navigation system may communicate an estimate of the pose to the computing device 306, so that the computing device 306 can generate a synthetic image at a portion overlapping the portion of the surface determined by the sensor 308. The computing device 306 may execute the remaining steps of method 100 and/or 200 and determine a final pose 118. The computing device 306 may then communicate the final pose to the navigation system, which accepts this input instead of an input by a satellite navigation system.

Computing device 306 is further communicatively coupled to a sensor 308 included in or attached to the platform 302. The sensor 308 preferably includes a camera that faces downwards if the platform is in a horizontal pose. The sensor 308 has a field of view 310 which allows observing a part of the portion 312. Portion 312 may comprise a portion of the surface of the earth. In embodiments, platform 302 may comprise a submarine, sensor 308 may comprise a sonar and portion 312 may comprise a part of the seabed. Portion 312 may comprise any other interface or surface detectable by sensor 308. For example, if sensor 308 comprises a sonar, portion 312 may comprise a portion of an interface between geological strata as far as the interface can generate a detectable sonar echo. The observed area may depend on distance to the portion, e.g. altitude, camera parameters and/or any preprocessing of the input images prior to processing by method 100. For example, a plurality of subsequently shot images may be stitched to form one full image. In this case, the full image may be used as an input image. The computing device 306 may comprise standard hardware, in particular a processor and a storage system storing, inter alia, georeferenced reference representations. The sensor 308 may comprise any device that can output an image, such as a camera, an imaging radar, e.g. a synthetic aperture radar, or an imaging sonar.

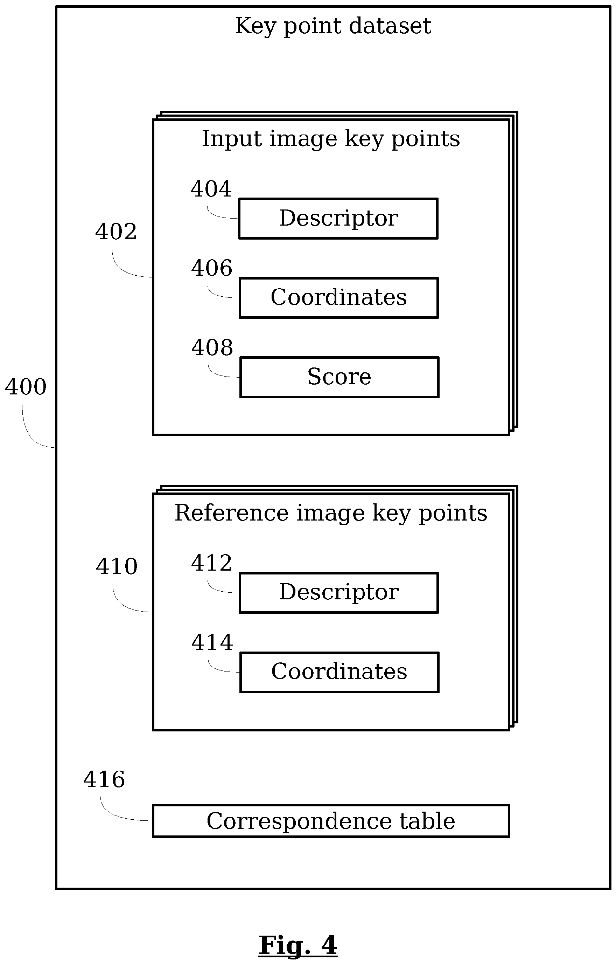

Figure 4 shows a block diagram of a key point dataset 400 generable by process 200. The dataset 400 comprises input image key points 402, reference key points 410, and a correspondence table 416 indicating which input image key point corresponds to which reference key point. An input image key point 402 may comprise a descriptor 404, such as a unique identifier. Key point 402 may further comprise coordinates 406, preferably 2D coordinates, such as pixel coordinates (column / row) on an image, and a key point score 408, indicative of a confidence of the determination of the key point. A reference key point 410 may include a descriptor 412, such as a unique identifier, and coordinates 414, preferably 3D coordinates, which preferably comprise geographic coordinates that allow a unique localisation. Key points 402 and reference key points 410 may be used as a ground truth together with corresponding images in a training dataset to train a neural network to execute any of steps 206 to 212 of method 200. The training may comprise predicting, by the neural network, a homography, determining predicted reference key points based on the homography, determining a loss based on the predicted reference key points and the ground truth, and adjusting weights of the neural network to reduce the loss.

Figure 5 shows images, key points, and transforms.

2D input image 512 may be obtained from a sensor, such as sensor 308 on Fig. 3. The image 512 shows a portion of a surface. The image 512 some patterns 514 which can be extracted and assigned to key points 502, 504. 506. As far as the image 512 shows a portion of the surface of the earth, patterns 514 may relate to trees, hill tops, road crossings, topographic structures such as fault scarps, or other points suitable for navigation.

The reference representation 516, preferably comprises a reference image. This allows generating a synthetic image 500. It is preferred if reference representation comprises model of the portion adapted to properties of a sensor operable to record the input image 512. For example, if the sensor is technically unable to discern certain features, e.g. colours at a certain wavelength, the reference representation 516 is preferably free from such features to reduce the processing load. More preferably, the reference representation 516 comprises a 3D image. This allows using information on the shape of the portion, e.g. a certain terrain, as for the pose determination. Reference representation 516 may comprise other data structures, such as a 3D model of a shape of the portion only. For example, if the sensor comprises a sonar, the reference representation 516 preferably comprises a model of features detectable by sonar. The reference representation 516 is preferably selected to indicate at least a part of the portion 512. Image 516 shows patterns 518, similar to image 512. Each pattern is related to one of the reference key points 520, 522, 524. However, the patterns may differ.

For example, the pattern denoted by the third reference key point 524 is not seen on the 2D image 512. This may refer to a very small pattern that is not visible using the sensor used to detect the input image 512. Such a pattern cannot be matched to a pattern on the 2D input image 512. Direct matching by a perspective n-point algorithm may lead to a wrong match to a different pattern that only seems to correspond. On the other hand, the 2D input image 512 may show a pattern, e.g. the pattern related to the third key point 506, not present on the reference representation 516. Such a pattern may comprise, e.g., a camera artifact. The presence of this pattern may also lead to a mismatch. Any such mismatch may be mitigated by a RANSAC algorithm. However, mismatches can lead to an entirely wrong determination of the pose. This is less probable the more key points are matched and the higher the score is at which key points were detected.

A further means to improve the reliability is the generation of the 2D synthetic image 500, which is generated from the georeferenced image 516, based on camera properties and settings. Synthetic image 500 shows patterns 508 indicative of key points. The patterns are derived from patterns on the georeferenced image 516.

However, the patterns 508 differ from the patterns on image 516 in that they are 2-dimensional, and in that they may contain patterns that are not present on the reference representation (possible artifacts) and that they do not contain patterns visible on the reference representation 516 that are not detectable by the sensor.

In particular, the synthetic image 500 shows not only the patterns related to the first and second key points 502 and 506, but also of a third key point that is not comprised in the reference representation 516. The 2D synthetic image 500 does not contain the third reference key point 524 as this key point would not be detectable by the sensor. Therefore, the synthetic image 500 is more similar to the 2D input image. A homography can be determined more easily and reliably than direct matching of the 2D input image 512 to the 3D georeferenced reference representation 516.

### Reference signs

- 100: Method of determining a pose of a platform
- 102-118: Steps of method 100
- 200: Method of determining a homography matrix
- 202-218: Steps of method 200
- 300: Scenario
- 302: Platform
- 304: Navigation system
- 306: Computing device
- 308: Sensor
- 310: Field of view of sensor 308
- 312: Portion of surface
- 400: Key point dataset
- 402: Input image key points
- 404: Descriptor
- 406: Coordinates
- 408: Score
- 410: Reference key points
- 412: Descriptor
- 414: Coordinates
- 416: Correspondence table
- 500: Synthetic image
- 502: First Key point
- 504: Second key point
- 506: Third key point
- 508: Patterns on image 500
- 510: Homography
- 512: Input image
- 514: Patterns on image 512
- 516: Reference representation
- 518: Patterns on representation 516
- 520: First reference key point
- 522: Second reference key point
- 524: Third reference key point

## Claims

1. A computer-implemented method of determining a pose of a platform (302), preferably an aircraft, the method comprising:
receiving (102) an input image (512) of a portion (312) of a surface, preferably the surface of the earth, the input image (512) captured from a position of the platform (302);
receiving (104) a georeferenced reference representation (516) of the portion (312);
based on the reference representation (516), generating (106) a synthetic image (500) of the portion (312);
determining a homography matrix between the synthetic image (500) and the input image (512); and
determining (120) the pose of the platform (302) based on the homography matrix.

2. The method of any of the preceding claims, wherein the synthetic image (500) is generated at a resolution equal to a resolution of the input image (512).

3. The method of any of the preceding claims,
wherein generating the synthetic image (500) is further based on a preliminary pose estimate of the platform (302).

4. The method of claim 3, further comprising determining the preliminary pose estimate by a navigation system (304), the navigation system (304) preferably comprising an Extended Kalman Filter, EKF,
wherein determining the preliminary pose estimate preferably comprises measuring a distance between the portion (312) and the platform (302).

5. The method of any of the preceding claims, wherein determining the homography matrix comprises applying a RANSAC algorithm.

6. The method of any of the preceding claims, wherein the homography matrix relates to a homography transform (510) that preserves angles between features within images.

7. The method of any of the preceding claims, wherein the homography matrix relates to a homography transform (510) that is free from scaling by a scaling factor outside a predetermined range.

8. The method of any of the preceding claims, wherein determining the homography matrix comprises:
processing the input image (512) by a deep neural network configured to extract one or more key points (402) and match the key points (402) by a nearest-neighbour algorithm or a neural network; and/or
processing the input image (512) by a deep neural network configured to return key point matches.

9. The method of any of the preceding claims, wherein the homography matrix is determined such that a predetermined minimum and/or maximum number of inlier key points between the input image (512) and the synthetic image (500) are matchable or matched.

10. The method of claim 9, wherein the inlier key points are processed to determine the pose only if a number of the inlier key points exceeds a predetermined threshold.

11. The method of any of the preceding claims, wherein the key points comprise input image (512) key points on the input image (512) and reference key points (410, 520, 522, 524) on the reference representation (516), the method further comprising matching the detected image key points to one or more reference key points (410, 520, 522, 524) on the reference representation (516).

12. The method of any of the preceding claims, wherein determining the pose of the platform (302) comprises processing key points by a Perspective-n-Point algorithm with RANSAC.

13. The method of any of the preceding claims, wherein the observer comprises an unmanned aerial vehicle, UAV, the method further comprising capturing the input image (512) by a sensor (308) attached to or comprised in the UAV.

14. A system comprising one or more processors and one or more storage devices, wherein the system is configured to perform the computer-implemented method of any one of claims 1-13.

15. A computer program product for loading into a memory of a computer, comprising instructions, that, when executed by a processor of the computer, cause the computer to execute a computer-implemented method of any of claims 1-13.
